# FASCICULE DE BREVET EUROPEEN

(11) **EP 0 979 217 B1**
(45) Date de publication et mention de la délivrance du brevet: **18.06.2003**
(21) Numéro de dépôt: 99937920.9
(22) Date de dépôt: 02.03.1999
(51) Int. Cl.: C03C 3/087

(54) **FEUILLE DE VERRE DESTINEE A ETRE TREMPEE THERMIQUEMENT**
THERMISCH HÄRTBARE GLASPLATTE
GLASS SHEET DESIGNED TO BE HEAT TEMPERED

(30) Priorité: 02.03.1998 FR 9802493
(43) Date de publication de la demande: 16.02.2000
(73) Titulaire: SAINT-GOBAIN GLASS FRANCE, 92400 Courbevoie (FR)
(72) Inventeur: BORDEAUX, Frédéric, F-92340 Bourg la Reine (FR); DUFFRENE, Lucas, F-75017 Paris (FR)
(74) Mandataire: Cardin, Elise
(86) Numéro de dépôt international: FR9900467
(87) Numéro de publication internationale: WO99044952

(56) Documents cités:
- EP-A- 0 555 552
- FR-A- 2 297 817
- US-A- 2 669 807

## Description

L'invention concerne des feuilles de verre destinées à être trempées thermiquement et plus précisément des feuilles de verre destinées à équiper des véhicules automobiles.

Bien qu'elle ne soit pas limitée à de telles applications, l'invention sera plus particulièrement décrite en référence à la réalisation de feuilles de verre minces, trempées thermiquement, c'est-à-dire présentant une épaisseur inférieure à 2,5 mm. En effet, de plus en plus, les constructeurs automobiles ont aujourd'hui tendance à vouloir limiter le poids correspondant aux vitrages alors que la surface verrière des automobiles augmente. Une diminution de l'épaisseur des feuilles de verre est donc requise pour répondre à ces nouvelles exigences.

Concernant la trempe thermique de ces feuilles de verre et plus particulièrement pour réaliser les vitres latérales des automobiles, il est nécessaire de respecter les prescriptions du règlement européen n° 43 relatif à l'homologation du vitrage de sécurité et des matériaux pour vitrages destinés à être montés sur les véhicules à moteur et leurs remorques. Selon ce règlement, les contraintes de trempe doivent être telles que le vitrage présente, en cas de bris, un nombre de fragments qui dans tout carré de 5 x 5 cm, est ni inférieur à 40 ni supérieur à 350 (nombre porté à 400 pour des vitrages d'une épaisseur inférieure ou égale à 2,5 mm). Toujours selon ces prescriptions, aucun des fragments ne doit être de plus de 3,5 cm², sauf éventuellement dans une bande de 2 cm de large à la périphérie du vitrage et dans un rayon de 7,5 cm autour du point d'impact et aucun fragment allongé de plus de 7,5 cm ne doit exister.

Les installations de trempe usuelles, notamment les dispositifs de bombage et de trempe de feuilles de verre par défilement sur un convoyeur à rouleaux présentant un profil courbe dans la direction de défilement des feuilles de verre autorisent la trempe conformément au règlement européen n° 43 de feuilles de verre de 3,2 mm d'épaisseur, de façon tout-à-fait satisfaisante.

Les techniques évoquées ci-dessus sont connues notamment des brevets français FR-B-2 242 219 et FR-B-2 549 465 et consistent à faire défiler des feuilles de verre, réchauffées dans un four horizontal, entre deux nappes de rouleaux - ou autres éléments tournants - disposés selon un profil curviligne, et passant au travers d'une zone terminale de trempe. Pour la production de vitres latérales, toits ouvrants ou autres vitrages, notamment de forme cylindrique, les nappes sont constituées par exemple par des tiges cylindriques droites disposées selon un profil circulaire. Les nappes peuvent encore être constituées d'éléments conférant une courbure secondaire aux vitrages, tels que des éléments coniques ou bien encore du type diabolo-tonneau. Cette technique permet une capacité de production très élevée car d'une part, les feuilles de verre n'ont pas à être largement espacées, une feuille de verre pouvant sans problème entrer dans la zone de formage alors que le traitement de la feuille précédente n'est pas achevé et d'autre part, si la longueur des rouleaux le permet, deux ou trois feuilles de verre peuvent être traitées simultanément de front.

La vitesse de défilement des plaques ou feuilles de verre est au moins égale à 10 cm/s et de l'ordre de 15 à 25 cm/s. La vitesse ne dépasse habituellement pas 30 cm/s pour autoriser un temps suffisant de trempe.

EP-A-0 555 552 décrit des feuilles de verre présentant une forte absorption des radiations infrarouges et ultraviolettes. les feuilles décrites dans les exemples de réalisation, d'une épaisseur de 3,8 mm, peuvent aisément subir une trempe thermique dans les conditions usuelles.

Lorsque l'épaisseur des feuilles de verre diminue et pour répondre aux mêmes normes de trempe, le coefficient d'échange thermique doit être fortement augmenté. Pour cela, il est possible d'augmenter la puissance de soufflage des dispositifs de trempe. De telles modifications entraînent d'une part des investissements importants et d'autre part des coûts de fonctionnement plus importants. Par ailleurs, l'augmentation de la puissance de soufflage peut nuire à la qualité optique des feuilles de verre et/ou à leur planéité.

Les inventeurs se sont ainsi donnés pour mission de réaliser des feuilles de verre trempées conformément au règlement européen n° 43 présentant une épaisseur inférieure à 2,5 mm sur des installations usuelles de trempe du type de celles décrites précédemment.

L'invention a ainsi pour but une feuille de verre destinée à être trempée thermiquement dont les propriétés intrinsèques conduisent à des résultats pour des épaisseurs inférieures à 2,5 mm à ceux habituellement obtenus pour des épaisseurs supérieures à 3 mm avec les mêmes dispositifs de refroidissement.

Ce but est atteint par une feuille de verre destinée à être trempée thermiquement dont la matrice est du type silico-sodo-calcique et présente un coefficient de dilatation α supérieur à 100.10⁻⁷K⁻¹, un module d'Young E supérieur à 60 GPa et une conductivité thermique K inférieure à 0,9 W/m.K.

De telles propriétés confèrent effectivement à la feuille de verre la possibilité d'être trempée thermiquement conformément au règlement européen n° 43 lorsque celle-ci présente une épaisseur inférieure à 2,5 mm.

Selon une réalisation préférée de l'invention, la feuille de verre présente un coefficient de poisson supérieur à 0,21.

Le module d'élasticité et le coefficient de poisson sont déterminés par le test suivant : une éprouvette de verre de dimensions 100 x 10 mm² et d'épaisseur inférieure à 6 mm est mise en flexion 4 points dont les appuis extérieurs sont séparés de 90 mm et les appuis intérieurs de 30 mm. Une jauge de contrainte est collée au centre de la plaque de verre. On en déduit les déplacements principaux (dans la longueur de la plaque et dans sa largeur). De la force appliquée on calcule la contrainte appliquée. Les relations entre contrainte et déplacements principaux permettent de déterminer le module d'élasticité et le coefficient de poisson.

De préférence encore, la chaleur spécifique de la feuille de verre est supérieure à 740 J/kg.K.

Selon une réalisation avantageuse de l'invention, la feuille de verre présente une densité supérieure à 2520 kg/cm³ et de préférence supérieure à 2550 kg/cm³.

De préférence encore la feuille de verre selon l'invention vérifie la relation suivante :

α.E/K>8000

Les matrices verrières des feuilles de verre selon l'invention sont avantageusement choisies parmi les matrices comportant en pourcentages pondéraux les constituants ci-après :

| | |
|---|---|
| SiO₂ | 45 - 69 % |
| Al₂O₃ | 0 - 14 % |
| CaO | 0 - 22 % |
| MgO | 0 - 10 % |
| Na₂O | 6 - 24 % |
| K₂O | 0 - 10 % |
| BaO | 0 - 12 % |
| B₂O₃ | 0 - 6 % |
| ZnO | 0 - 10 % |

Les compositions de verre ci-dessus proposées présentent notamment l'avantage de pouvoir être fondues et transformées en ruban de verre sur des installations de type « float » à des températures voisines de celles adoptées pour la fabrication de verre silico-sodo-calcique classique.

Les compositions sont effectivement choisies pour présenter une température correspondant à la viscosité η, exprimée en poise, telle que logη=2 inférieure à 1500°C pour autoriser une fusion dans des conditions usuelles. D'autre part, les compositions selon l'invention présentent un écart suffisant entre la température de formage du verre et sa température de liquidus ; en effet, dans la technique du verre flotté en particulier, il est important que la température de liquidus du verre demeure égale ou inférieure à la température correspondant à la viscosité, exprimée en poise, telle que logη=3,5. Cet écart est avantageusement d'au moins 10°C à 30°C.

La teneur en SiO₂ ne doit pas excéder 69% ; au-delà, la fusion du mélange vitrifiable et l'affinage du verre nécessitent des températures élevées qui provoquent une usure accélérée des réfractaires des fours. Au-dessus de 45%, la stabilité des verres selon l'invention est insuffisante. Avantageusement la teneur en SiO₂ est supérieure à 53%.

L'alumine joue un rôle de stabilisant ; cet oxyde favorise l'augmentation de la température inférieure de recuisson. La teneur en Al₂O₃ ne doit pas excéder 14% sous peine de rendre trop difficile la fusion et d'augmenter dans des proportions inacceptables la viscosité du verre aux températures élevées.

Les compositions de verre selon l'invention peuvent encore comporter l'oxyde B₂O₃. La teneur en B₂O₃ n'excède alors pas 6% car, au-delà de cette valeur, la volatilisation du bore en présence d'oxydes alcalins lors de l'élaboration du verre peut devenir non négligeable et peut conduire à une corrosion des réfractaires. En outre, des teneurs plus élevées en B₂O₃ nuisent à la qualité du verre. Lorsque B₂O₃ est présent dans la composition de verre avec une teneur supérieure à 4%, la teneur en Al₂O₃ est avantageusement supérieure à 10%.

L'influence des autres oxydes sur l'aptitude des verres selon l'invention à être fondus et flottés sur un bain métallique, ainsi que sur leurs propriétés, est la suivante : les oxydes alcalins et plus particulièrement Na₂O et K₂O permettent de maintenir la température de fusion des verres selon l'invention et leur viscosité aux températures élevées dans des limites acceptables. Pour ce faire, la somme des teneurs de ces oxydes alcalins demeure supérieure à 11% et de préférence supérieure à 13%.

Les oxydes alcalino-terreux introduits dans les verres selon l'invention ont pour effet également de diminuer la température de fusion ainsi que la viscosité des verres aux températures élevées. La somme des teneurs de ces oxydes est d'au moins 6% et de préférence supérieure à 8%. Au-delà de 28% environ l'aptitude des verres à dévitrifier peut s'amplifier dans des proportions incompatibles avec le procédé de flottage sur bain métallique.

Les compositions de verre peuvent en outre contenir des agents colorants, notamment pour des applications de type vitrages automobiles ; il peut s'agir notamment des oxydes de fer, de chrome, de cobalt, de nickel, de sélénium, ...

Selon une première variante de l'invention, la feuille de verre selon l'invention est telle que sa matrice comporte en pourcentages pondéraux les constituants précédemment énoncés et vérifie les relations :

Na₂O + K₂O > 20%

Na₂O + K₂O + CaO > 27%

Selon une seconde variante de l'invention, la matrice verrière vérifie les relations :

Na₂O + K₂O > 17%

Na₂O + K₂O + CaO > 35%

Selon d'autres variantes selon l'invention, la matrice verrière vérifie les relations :

Na₂O + K₂O > 17%

Na₂O + K₂O + CaO > 29%

quand Na₂O > 18%
et/ou K₂O > 5%
et/ou Al₂O₃ < 3%

Selon ces dernières variantes et lorsque l'oxyde TiO₂ est présent dans la matrice, cette dernière vérifie en outre la relation :

TiO₂ + Al₂O₃ < 3%

L'ensemble des matrices verrières décrites selon ces différentes variantes autorisent la réalisation de feuilles de verre présentant une épaisseur inférieure à 2,5 mm et avantageusement supérieure à 1,6 mm qui peuvent être trempées thermiquement conformément au règlement n°43 sur des dispositifs de trempe initialement prévus pour la trempe de verre d'une épaisseur de 3,15 mm.

Les avantages présentés par les compositions de verre selon l'invention seront mieux appréciés à travers les exemples présentés ci-après.

Différentes compositions de verre conformes à l'invention ont été fondues et transformées en ruban de verre selon l'invention. Ces compositions sont au nombre de 6 (numérotation de « 1 à 6 »). La composition « T » est une composition témoin, correspondant à du verre usuel pour vitrage automobile qui peut être trempé thermiquement conformément au règlement européen n°43 lorsqu'il se présente sous la forme d'une feuille de verre d'une épaisseur de 3,15 mm.

Ces différentes compositions sont reprises dans le tableau ci-après :

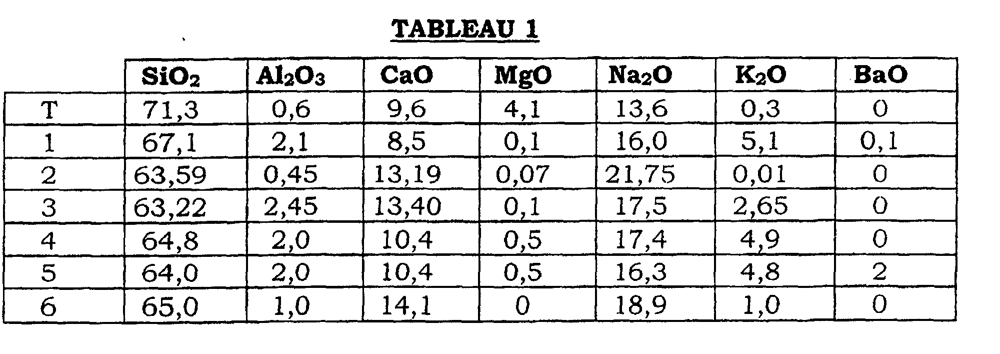

Dans le tableau suivant apparaissent les différentes propriétés des verres énoncés précédemment :

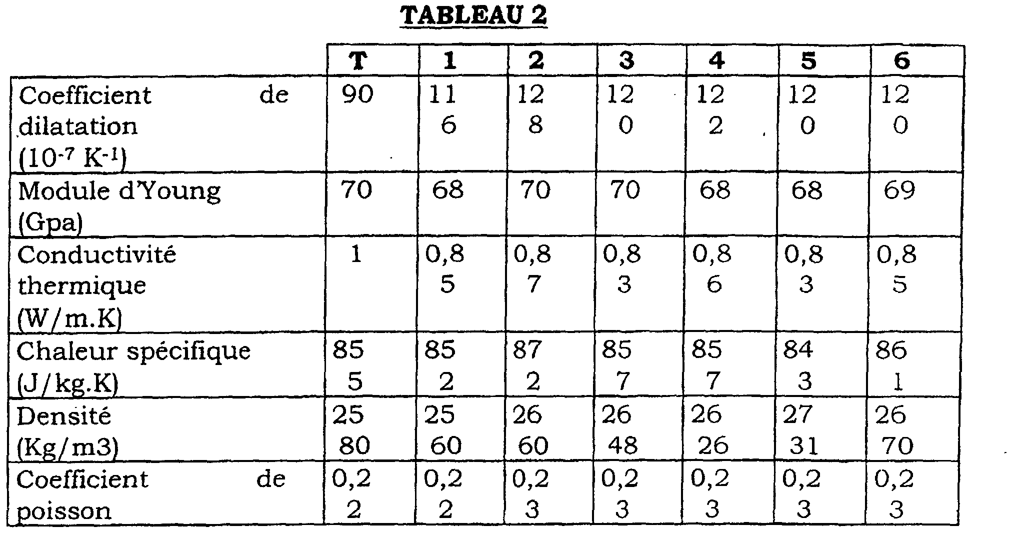

Il a été mis en évidence la possibilité de fondre ces verres et de les transformer pour la plupart selon le procédé float.

Il est apparu lors des essais que ces compositions de verre peuvent être fondues dans des conditions tout-à-fait classiques et même à des températures nettement inférieures à celles de la composition témoin T. Ces différences de températures permettent d'envisager une réduction des coûts énergétiques.

Par contre, il apparaît que les paliers de formage, c'est-à-dire la différence entre la température correspondant à une viscosité η, exprimée en poise, telle que logη=3,5 et la température de liquidus, sont plus étroits pour les compositions selon l'invention ; ils sont toutefois suffisants pour garantir un formage de qualité.

Il est également apparu que la température initiale de trempe est nettement inférieure pour les verres selon l'invention ; cela entraîne également des réductions de coût énergétique et une usure moins rapide des fours.

Le dernier tableau ci-après présenté montre les épaisseurs des feuilles de verre qui ont été trempées conformément au règlement européen n°43.

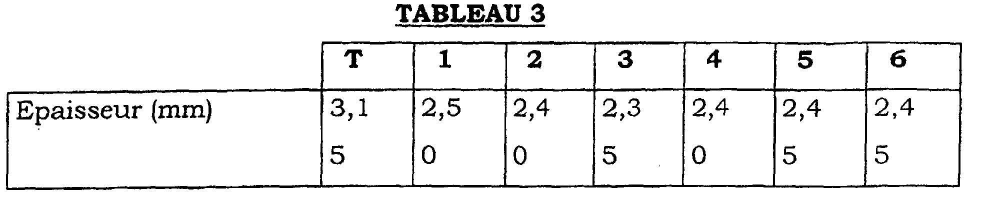

Il apparaît donc clairement que les feuilles de verre réalisées à partir des compositions selon l'invention autorisent une trempe thermique dite « de sécurité » pour des épaisseurs inférieures à 2,5 mm en utilisant les dispositifs usuels qui limitent ladite trempe à une épaisseur de 3,15 mm lorsqu'il s'agit de la composition « T ».

Par ailleurs, la qualité optique des feuilles de verre, selon l'invention, présentant une épaisseur inférieure à 2,5 mm et trempées thermiquement est tout-à-fait comparable à celle des feuilles de verre présentant une épaisseur de 3,15 mm réalisées à partir de la composition témoin « T ».

## Revendications

1. Feuille de verre destinée à être trempée thermiquement, en particulier conformément au règlement européen n° 43, dont la matrice est du type silico-sodo-calcique, **caractérisée en ce qu'**elle présente un coefficient de dilatation α supérieur à 100.10⁻⁷ K⁻¹, un module d'Young E supérieur à 60 GPa et une conductivité thermique K inférieure à 0,9 W/m.K pour une épaisseur inférieure à 2,5mm.

2. Feuille de verre selon la revendication 1, **caractérisée en ce qu'**elle présente un coefficient de Poisson supérieur à 0,21.

3. Feuille de verre selon l'une des revendications 1 où 2, **caractérisée en ce qu'**elle présente une chaleur spécifique supérieure à 740 J/kg .K.

4. Feuille de verre selon l'une des revendications 1 à 3, **caractérisée en ce qu'**elle présente une densité supérieure à 2520 kg/m³.

5. Feuille de verre selon l'une des revendications précédentes, **caractérisée en ce qu'**elle vérifie la relation :
α.E/K > 8000

6. Feuille de verre selon l'une des revendications précédentes, **caractérisée en ce que** sa matrice comporte en pourcentages pondéraux les constituants ci-après :
| | |
|---|---|
| SiO₂ | 45-69 % |
| Al₂O₃ | 0-14 % |
| CaO | 0-22 % |
| MgO | 0-10 % |
| Na₂O | 6-24 % |
| K₂O | 0-10 % |
| BaO | 0-12 % |
| B₂O₃ | 0-6 % |
| ZnO | 0-10 % |
et satisfait les relations :
Na₂O + K₂O > 20 %
Na₂O + K₂O + CaO > 27 %

7. Feuille de verre selon l'une des revendications précédentes, **caractérisée en ce que** sa matrice comporte en pourcentages pondéraux les constituants ci-après :
| | |
|---|---|
| SiO₂ | 45-69 % |
| Al₂O₃ | 0-14 % |
| CaO | 1-22 % |
| MgO | 0-10 % |
| Na₂O | 6-24 % |
| K₂O | 0-10 % |
| BaO | 0-12 % |
| B₂O₃ | 0-6 % |
| ZnO | 0-10 % |
et satisfait les relations :
Na₂O + K₂O > 17 %
Na₂O + K₂O + CaO > 35 %

8. Feuille de verre selon l'une des revendications précédentes, **caractérisés en ce que** sa matrice comporte en pourcentages pondéraux les constituants ci-après :
| | |
|---|---|
| SiO₂ | 45-69 % |
| Al₂O₃ | 0-14 % |
| CaO | 0-22 % |
| MgO | 0-10 % |
| Na₂O | 6-24 % |
| K₂O | 0-10 % |
| BaO | 0-12 % |
| B₂O₃ | 0-6 % |
| ZnO | 0-10 % |
et satisfait les relations :
Na₂O + K₂O > 17 %
Na₂O + K₂O + CaO > 29 %
quand Na₂O > 18 %
et/ou K₂O > 5 %
et/ou Al₂O₃ < 3 %

9. Feuille de verre selon la revendication 8, la matrice pouvant comporter l'oxyde TiO₂, **caractérisés en ce qu'**elle vérifie la relation :
TiO₂ + Al₂O₃ < 3 %

## Claims

1. Sheet of glass intended to be heat toughened, in particular in accordance with European regulation N° 43, whose matrix is of the soda-lime-silica type, **characterised in that** it has a coefficient of expansion α greater than 100.10⁻⁷ K⁻¹, a Young's modulus E greater than 60 GPa and a thermal conductivity K of less than 0.9 W/m.K for a thickness of less than 2.5 mm.

2. Glass sheet according to Claim 1, **characterised in that** it has Poisson's ratio greater than 0.21.

3. Glass sheet according to one of Claims 1 or 2, **characterised in that** it has a specific heat greater than 740 J/kg.K.

4. Glass sheet according to one of Claims 1 to 3, **characterised in that** it has a density greater than 2520 kg/m³.

5. Glass sheet according to one of the preceding claims, **characterised in that** it satisfies the relationship:
α.E/K > 8000

6. Glass sheet according to one of the preceding claims, **characterised in that** its matrix comprises, in proportions by weight, the following constituents:
| | |
|---|---|
| SiO₂ | 45-69% |
| Al₂O₃ | 0-14% |
| CaO | 0-22% |
| MgO | 0-10% |
| Na₂O | 6-24% |
| K₂O | 0-10% |
| BaO | 0-12% |
| B₂O₃ | 0-6% |
| ZnO | 0-10% |
and satisfies the relationships:
Na₂O + K₂O > 20%
Na₂O + K₂O + CaO > 27%

7. Glass sheet according to one of the preceding claims, **characterised in that** its matrix comprises, in proportions by weight, the following constituents:
| | |
|---|---|
| SiO₂ | 45-69% |
| Al₂O₃ | 0-14% |
| CaO | 1-22% |
| MgO | 0-10% |
| Na₂O | 6-24% |
| K₂O | 0-10% |
| BaO | 0-12% |
| B₂O₃ | 0-6% |
| ZnO | 0-10% |
and satisfies the relationships:
Na₂O + K₂O > 17%
Na₂O + K₂O + CaO > 35%

8. Glass sheet according to one of the preceding claims, **characterised in that** its matrix comprises, in proportions by weight, the following constituents:
| | |
|---|---|
| SiO₂ | 45-69% |
| Al₂O₃ | 0-14% |
| CaO | 0-22% |
| MgO | 0-10% |
| Na₂O | 6-24% % |
| K₂O | 0-10% |
| BaO | 0-12% |
| B₂O₃ | 0-6% |
| ZnO | 0-10% |
and satisfies the relationships:
Na₂O + K₂O > 17%
Na₂O + K₂O + CaO > 29%
when Na₂O > 18%
and/or K₂O > 5%
and/or Al₂O₃ < 3%

9. Glass sheet according to Claim 8, the matrix being able to comprise the oxide TiO₂, **characterised in that** it satisfies the relationship:
TiO₂ + Al₂O₃ < 3%

## Patentansprüche

1. Glasscheibe, die vorgesehen ist, thermisch, insbesondere gemäß der Europäischen Regelung Nr. 43, vorgespannt zu werden, und deren Matrix vom Typ Kalk-Natron-Silicat ist, **dadurch gekennzeichnet, dass** sie bei einer Dicke von unter 2,5 mm einen Ausdehnungskoeffizienten α von über 100·10⁻⁷ K⁻¹, einen Elastizitätsmodul E von über 60 GPa und eine Wärmeleitfähigkeit K von unter 0,9 W/m·K aufweist.

2. Glasscheibe nach Anspruch 1, **dadurch gekennzeichnet, dass** sie eine Poisson-Zahl von über 0,21 aufweist.

3. Glasscheibe nach Anspruch 1 oder 2, **dadurch gekennzeichnet, dass** sie eine spezifische Wärme von über 740 J/kg·K aufweist.

4. Glasscheibe nach einem der Ansprüche 1 bis 3, **dadurch gekennzeichnet, dass** sie eine Dichte von über 2520 kg/m³ aufweist.

5. Glasscheibe nach einem der vorhergehenden Ansprüche, **dadurch gekennzeichnet, dass** sie der Relation
α·E/K > 8000
genügt.

6. Glasscheibe nach einem der vorhergehenden Ansprüche, **dadurch gekennzeichnet, dass** ihre Matrix gewichtsmäßig die Bestandteile
| | |
|---|---|
| SiO₂ | 45 bis 69 %, |
| Al₂O₃ | 0 bis 14 %, |
| CaO | 0 bis 22 %, |
| MgO | 0 bis 10 %, |
| Na₂O | 6 bis 24 %, |
| K₂O | 0 bis 10 %, |
| BaO | 0 bis 12 %, |
| B₂O₃ | 0 bis 6 % und |
| ZnO | 0 bis 10 % |
umfasst und den Relationen
Na₂O + K₂O > 20 % und
Na₂O + K₂O + CaO > 27 %
genügt.

7. Glasscheibe nach einem der vorhergehenden Ansprüche, **dadurch gekennzeichnet, dass** ihre Matrix gewichtsmäßig die Bestandteile
| | |
|---|---|
| SiO₂ | 45 bis 69 %, |
| Al₂O₃ | 0 bis 14 %, |
| CaO | 1 bis 22 %, |
| MgO | 0 bis 10 %, |
| Na₂O | 6 bis 24 %, |
| K₂O | 0 bis 10 %, |
| BaO | 0 bis 12 %, |
| B₂O₃ | 0 bis 6 % und |
| ZnO | 0 bis 10 % |
umfasst und den Relationen
Na₂O + K₂O > 17 % und
Na₂O + K₂O + CaO > 35 %
genügt.

8. Glasscheibe nach einem der vorhergehenden Ansprüche, **dadurch gekennzeichnet, dass** ihre Matrix gewichtsmäßig die Bestandteile
| | |
|---|---|
| SiO₂ | 45 bis 69 %, |
| Al₂O₃ | 0 bis 14 %, |
| CaO | 0 bis 22 %, |
| MgO | 0 bis 10 %, |
| Na₂O | 6 bis 24 %, |
| K₂O | 0 bis 10 %, |
| BaO | 0 bis 12 %, |
| B₂O₃ | 0 bis 6 % und |
| ZnO | 0 bis 10 % |
umfasst und den Relationen
Na₂O + K₂O > 17 % und
Na₂O + K₂O + CaO > 29 % genügt,
wenn Na₂O > 18 %
und/oder K₂O > 5 %
und/oder Al₂O₃ < 3 %.

9. Glasscheibe nach Anspruch 8, deren Matrix das Oxid TiO₂ enthalten kann, **dadurch gekennzeichnet, dass** diese der Relation
TiO₂ + Al₂O₃ < 3 %
genügt.
